# DEMANDE DE BREVET EUROPEEN

(11) **EP 2 998 722 A1**
(43) Date de publication de la demande: **23.03.2016**
(21) Numéro de dépôt: 15185934.5
(22) Date de dépôt: 18.09.2015
(51) Int. Cl.: G01N 1/22, E04H 1/12, G01N 1/02

(54) **CABINE DE RECHERCHE PAR DÉTECTION OLFACTIVE**

(30) Priorité: 18.09.2014 FR 1458826
(71) Demandeur: Hub Safe, 93290 Tremblay en France (FR)
(72) Inventeur: CALMES, Christophe, 91190 GIF SUR YVETTE (FR); JAMAIN, Frédéric, 95470 SURVILLIER (FR)
(74) Mandataire: Gaillarde, Frédéric F. Ch.

(57) **Abrégé**

L'invention concerne une cabine (1) de recherche par détection olfactive, comprenant : au moins une paroi latérale (2) dressée sensiblement verticalement et délimitant un espace intérieur (3) agencé pour accueillir une personne à contrôler ; et une ouverture (4) permettant l'accès de la personne à contrôler à cet espace intérieur (3), la cabine (1) étant caractérisée en ce qu'elle comprend un dispositif de mise en circulation d'air (5) pour diriger un flux d'air contenu dans l'espace intérieur (3) vers une zone de détection (6) agencée pour canaliser le flux d'air de l'espace intérieur (3) vers l'extérieur (7).

## Description

Le domaine technique de l'invention est celui des moyens de contrôle par détection olfactive et concerne plus particulièrement une cabine de recherche par détection olfactive.

Actuellement, il existe de nombreux équipements électroniques permettant la détection et l'identification olfactive. De tels équipements peuvent être utilisés, par exemple, dans le cadre de contrôles de personnes, notamment pour la recherche ou détection de matières ou substances spécifiques, telles que des explosifs ou des drogues. Toutefois, de tels équipements présentent les inconvénients d'être onéreux et pas toujours fiables.

L'utilisation de chiens renifleurs par des équipes cynotechniques permet également de procéder à des contrôles par détection olfactive. Toutefois, la réglementation dans certains pays ne permet pas toujours l'utilisation de chiens à des fins de contrôles de personnes au contact de celles-ci, en particulier dans des lieux très fréquentés, tels que des aéroports. Par ailleurs, le contact visuel et/ou physique entre les personnes à contrôler et l'animal n'est pas toujours souhaitable.

Quel que soit le moyen de détection, électronique ou cynotechnique, la recherche d'une localisation précise sur les personnes des matières ou des substances à détecter est souvent délicate. Selon le moyen de détection utilisé, un capteur de l'équipement électronique doit être déplacé autour de la personne à contrôler, ou alors, le chien doit se déplacer autour de ladite personne à contrôler.

Cette détection peut être également rendue difficile de par l'environnement même du lieu où doit être opérée la détection. Dans un aéroport, par exemple, des moyens de ventilation sont mis en oeuvre de sorte que les molécules odorantes à détecter sont rapidement évacuées et ventilées. Ceci réduit la capacité de détection par l'appareil électronique ou bien par le chien ce qui n'est pas souhaitable, d'autant plus dans le cadre d'un aéroport ou la problématique de sécurité est essentielle.

Le dispositif décrit par la suite vise à remédier à tout ou partie des inconvénients de l'état de la technique.

A cet effet, l'invention a pour objet une cabine de recherche par détection olfactive, comprenant :
- au moins une paroi latérale dressée sensiblement verticalement et délimitant un espace intérieur agencé pour accueillir une personne à contrôler, et
- une ouverture permettant l'accès de la personne à contrôler à cet espace intérieur,
la cabine étant remarquable en ce qu'elle comprend un dispositif de mise en circulation d'air pour diriger un flux d'air contenu dans l'espace intérieur vers une zone de détection agencée pour canaliser ledit flux d'air de l'espace intérieur vers l'extérieur.

Grâce à une telle cabine, il est possible de canaliser un flux d'air provenant de l'espace intérieur où se trouve la personne à contrôler, cet air intérieur contenant les molécules odorantes de la personne s'y trouvant, vers la zone de détection où cet air est contrôlé. La capacité de détection par l'appareil électronique ou bien par le chien est ainsi améliorée.

Le nombre de parois latérales peut varier, notamment en fonction de sa forme et de sa section. Une cabine de section circulaire par exemple peut présenter une seule paroi. Alternativement, une cabine de section carrée ou rectangulaire peut présenter soit quatre paroi, dans ce cas l'ouverture est effectuée dans l'une des parois, soit présenter trois parois, dans ce cas l'un des côtés de la cabine constitue lui-même l'ouverture de ladite cabine.

Selon une configuration particulière, la zone de détection comprend au moins un orifice, de préférence un seul, agencé pour canaliser le flux d'air provenant de l'espace intérieur vers l'extérieur. Ceci permet notamment d'améliorer la canalisation du flux d'air.

Chacun des orifices de la zone de détection peut être recouvert d'un côté, ou des deux, par au moins une plusieurs grille. La grille peut aussi être placée à l'intérieur même de l'orifice.

Avantageusement, la zone de détection est située au niveau de la paroi latérale et opposée à l'ouverture. Ceci permet d'améliorer à la fois la cinématique du flux d'air, de l'air intérieur vers la zone de détection, notamment vers l'orifice.

Selon une caractéristique technique particulière, le dispositif de mise en circulation comprend au moins un dispositif d'aspiration d'air situé de préférence au voisinage d'une extrémité supérieure de la paroi latérale. Le dispositif d'aspiration peut soit aspirer de l'air contenu dans l'espace intérieur de la cabine, soit aspirer de l'air extérieur. Dans ce dernier cas, sa position aux abords de l'extrémité supérieure permet d'aspirer de l'air le plus neutre possible en odeurs. Dans le cas où l'air aspiré comprend de l'air intérieur, cela permet de limiter l'apport d'air extérieur dans le flux d'air traversant la zone de détection, telle que l'orifice, et donc d'améliorer la capacité de détection par l'appareil électronique ou bien par le chien.

Avantageusement encore, le dispositif de mise en circulation comprend au moins un dispositif de projection d'air orienté sensiblement vers l'espace intérieur de la cabine, de préférence vers la zone de détection. Ceci permet en particulier de diriger globalement le flux d'air vers la zone de détection.

Ce dispositif de projection d'air peut, soit comprendre des moyens pour déplacer l'air localement situé dans son voisinage et le diriger vers la zone de détection, à la manière de ventilateurs. Dans ce cas le dispositif de projection d'air n'a pas besoin d'une alimentation d'air annexe.

Dans une configuration avantageuse, le dispositif de projection projette l'air aspiré par le dispositif d'aspiration vers la zone de détection. Dans ce cas la source annexe d'air est formée par l'air aspiré.

Il pourrait également être utilisé, en complément ou alternativement, au moins une source annexe qui serait stockée dans un réservoir, pour alimenter le dispositif de projection en gaz, de préférence sous pression. Dans ce cas, le gaz est choisi de sorte à être le moins odorant possible. Cela peut être simplement de l'air sous pression. Le dispositif d'aspiration peut être remplacé par un tel dispositif d'alimentation annexe alimentant en gaz le dispositif de projection.

D'une manière générale la cabine peut être autonome en air pulsé ou projeté.

Selon une autre caractéristique technique particulière, le dispositif de projection est situé au voisinage de l'ouverture, de préférence de part et d'autre de celle-ci.

Cette caractéristique est particulièrement avantageuse lorsque la zone de détection est située à l'opposé de l'ouverture. En effet, dans une telle configuration le dispositif de projection dirige globalement le flux d'air vers la zone de détection après avoir traversé de part en part l'espace intérieur de la cabine, où est placée la personne lors d'un contrôle. La personne à contrôler est alors placée sur un chemin du flux d'air entre le dispositif de projection et la zone de détection et les particules odorantes placées sur ce chemin sont alors véhiculées par ce flux.

Avantageusement, le dispositif de projection comprend une pluralité de buses solidaires de la paroi latérale.

Selon une configuration technique particulière, la paroi latérale comprend une double-paroi, formée par une paroi intérieure placée du côté de l'espace intérieur de la cabine, et une paroi extérieure opposée, entre lesquelles circule l'air aspiré vers le dispositif de projection. Cela permet de réduire l'encombrement extérieur de la cabine.

Dans une telle configuration le gaz peut circuler sur un chemin, défini entre le dispositif d'aspiration et/ou le dispositif d'alimentation annexe en gaz, et le dispositif de projection, directement situé entre la paroi intérieure et la paroi extérieure.

Alternativement, le chemin de ce gaz peut être défini par un réseau de conduites situées dans la ou les paroi(s) latérale(s) et/ou entre les parois intérieure et extérieure.

Pour limiter le contact visuel entre la personne contrôlée et l'animal, la paroi latérale est, au moins localement, opaque. De préférence, la zone opaque s'étend au moins au niveau de la zone de détection. En effet, dans le cas où c'est un chien qui est utilisé pour détecter, grâce à son odorat, les matériaux ou substances recherchées, le chien vient sentir l'air traversant l'orifice au niveau de cette zone de détection.

Par ailleurs, la cabine présente de préférence, en bas de celle-ci, un socle posé ou fixé ou sol, à partir duquel se dresse la paroi latérale. A l'opposé verticalement de ce socle, en haut de la cabine, cette dernière présente avantageusement un toit. Ceci améliore le conditionnement de l'air chargé en molécules odorantes dans l'espace intérieur, afin de les canaliser vers la zone à contrôler et éviter leur évacuation non contrôlée.

De préférence, ce toit est au moins localement, en matériau(x) transparent(s) pour laisser passer la lumière naturelle, ou artificielle, du lieu d'utilisation de la cabine et ainsi éviter l'emploi de sources lumineuses spécifiques. L'éclairage extérieur de la cabine suffit dans ces conditions pour éclairer l'espace intérieur de ladite cabine. Ce matériau transparent peut, par exemple, être formé à base de polyméthacrylate de méthyle (PMMA).

Dans une configuration particulière, la ou les paroi(s) latérale(s) est (sont) solide(s) et en matériau(x) métallique(s), de préférence en inox. L'inox présente l'avantage de ne pas présenter une odeur particulière, donc d'être relativement neutre, de sorte à ne pas contaminer ou polluer le flux d'air traversant l'orifice de la zone de détection.

Avantageusement encore, la cabine de recherche est démontable.

Selon une caractéristique technique, l'ouverture communique continuellement entre l'espace intérieur de la cabine et l'extérieur, c'est-à-dire qu'elle n'est pas fermée, par exemple par une porte, entre le moment où la personne contrôlée entre dans la cabine et le moment où elle en sort. Cela permet de faciliter le flux de personnes pouvant passer dans la cabine et être contrôlées.

Dans une configuration spécifique, la cabine comprend une porte, distincte de l'ouverture, pour communiquer entre l'espace intérieur et l'extérieur, formant un sas de passage.

Par exemple, la porte comprend un ventail formé par une partie de la paroi latérale, de préférence en regard de l'ouverture de la cabine, ledit ventail étant articulé par rapport à ladite cabine pour former une porte intégrée à ladite cabine entre l'espace intérieur de celle-ci et l'extérieur.

Grâce à une telle caractéristique, la personne contrôlée peut entrer dans la cabine en traversant l'ouverture puis en sortir par la porte qui communique avec l'extérieur. Ainsi, la cabine forme un sas de passage, ou sas de sécurité, pour les personnes à contrôler. Cela permet d'améliorer encore le flux de personnes pouvant passer dans la cabine pour être contrôlées.

Dans ce cas, et pour assurer l'articulation de la porte avec la cabine, celle-ci comprend latéralement des charnières, par exemple réalisées avec des gonds.

La porte ou un encadrement de la porte, par exemple une huisserie ou la paroi latérale elle-même, comprend de préférence des moyens d'étanchéité, tels des joints, répartis sur son pourtour de sorte à éviter que des fuites d'air éventuelles créent un courant d'air parasite pouvant ventiler et/ou polluer le flux d'air dirigé vers, et traversant, l'orifice de la zone de détection.

Dans une configuration particulière, la porte est formée par une découpe dans la paroi latérale. De préférence encore, la porte est une porte battante va-et-vient, c'est-à-dire qui se pousse de chaque côté.

Avantageusement, la cabine présente des témoins lumineux du côté de la zone de détection et/ou du côté de l'ouverture.

Les témoins lumineux placés du côté de la zone de détection permettent d'indiquer, à une personne responsable du chien ou tout autre personne située du côté de la zone détection, la présence d'une personne ou non dans la cabine.

Les témoins lumineux placés du côté de l'ouverture, orientés vers l'extérieur et/ou l'espace intérieur, permettent d'indiquer si une personne contrôlée est autorisée à sortir ou non de la cabine. Les témoins lumineux placés dans l'espace intérieur peuvent être alternativement situés, lorsque la cabine comprend une porte intégrée à la paroi latérale, au niveau de ladite porte.

Dans une configuration technique particulière un dispositif de détection de présence est couplé avec le dispositif de mise en circulation du flux d'air de l'espace intérieur vers l'extérieur via la zone de détection de sorte à fonctionner automatiquement dès qu'une personne s'y trouve.

D'autres caractéristiques et avantages de l'invention ressortiront à la lecture de la description qui suit, donnée uniquement à titre d'exemple, en référence aux figures annexées, qui illustrent :
- figures 1, 2 et 3, des vues en perspective d'une cabine de recherche selon un mode de réalisation ;
- figure 4, une vue en perspective d'une cabine de recherche selon ce mode de réalisation, sur laquelle est représenté un flux d'air généré par un dispositif de mise en circulation d'air.

Pour plus de clarté, les éléments identiques ou similaires sont repérés par des signes de référence identiques sur l'ensemble des figures.

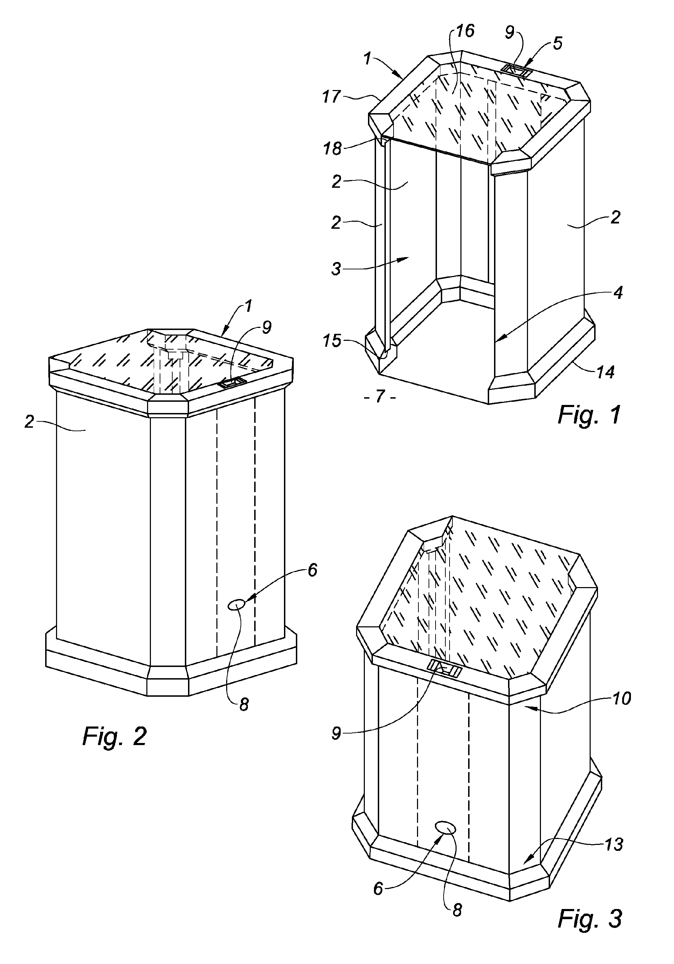

Les figures 1, 2 et 3 représentent des vues en perspective, respectivement de face, arrière et de dessus d'une cabine 1 de recherche par détection olfactive selon un mode de réalisation.

La cabine 1 de recherche comprend sept parois latérales 2 dressées verticalement par rapport au sol. Ces parois latérales délimitent ensemble un espace intérieur 3 agencé pour accueillir une personne à contrôler.

Ces parois latérales 2 sont disposées de sorte que trois parois latérales 2 dites principales sont disposées perpendiculairement deux à deux et présentent ensemble globalement une forme de « U ». La section dans un plan horizontal, à savoir dans un plan parallèle au plan du sol, de l'espace intérieur de la cabine 1 est ici sensiblement rectangulaire. Cette forme rectangulaire présente des chanfreins formés par quatre autres surfaces latérales 2 dites secondaires.

Par ailleurs, la cabine présente, à une extrémité inférieure 13 des parois latérales 2, un socle 14 formant base, ce socle 14 étant posé ou fixé ou sol. Ce socle présente un rail 15 continu, agencé pour y loger les parois latérales 2, et à partir duquel se dressent verticalement chacune desdites parois latérales 2.

A l'opposé verticalement de ce socle 14, à une extrémité supérieure 10 des parois latérales 2, ladite cabine 1 présente un toit 16. Le toit 16 est formé d'une plaque en matériau plastique transparent, permettant de laisser passer la lumière naturelle, ou artificielle du lieu d'utilisation de ladite cabine 1. Cette plaque en matériau plastique est bordée sur une partie de sa périphérie par une embase supérieure 17, laquelle comprend un rail 18, orienté du côté du socle 14 de la cabine 1, et destiné à accueillir une tranche supérieure des parois latérales 2.

Dans cette configuration, l'espace intérieur 3 de la cabine 1 est délimité verticalement par le socle 14 et le toit 16.

Les parois latérales 2 peuvent être indépendantes les unes des autres et reliées ensembles bords à bords et de manières étanches dans une position assemblée, ou bien, former ensemble une pièce monobloc. Dans le premier cas, les parois latérales 2 sont de préférence amovibles et/ou articulées entre elles de sorte à faciliter le montage et le démontage de la cabine 1.

La cabine 1 de recherche comprend en outre une ouverture 4. Cette ouverture est délimitée verticalement par le socle 14 et le toit 16 et horizontalement par des bords de deux des chanfreins formant parois latérales 2 secondaires de la cabine 1. En d'autres termes, l'espace intérieur 3 présente dans le plan horizontal une section sensiblement rectangulaire délimitée par l'ouverture 4, et par les parois latérales 2.

De manière générale, cette ouverture 4 présente des dimensions suffisantes pour permettre l'accès d'une personne à contrôler dans l'espace intérieur 3. Ici une largeur de l'ouverture 4, définie comme la distance entre les deux parois latérales 2 qui la délimitent horizontalement, est égale à 1m. Sa hauteur, séparant le sol de son toit 16, sensiblement équivalente à la hauteur de la cabine 1, est égale à 2,20 m. Cette hauteur est choisie de sorte à faciliter l'accès d'une personne dans la cabine sans que celle-ci soit contrainte de se baisser, ni au niveau de l'ouverture 4, ni dans l'espace intérieur 3 de la cabine 1.

L'ouverture 4 est également dite « libre », c'est-à-dire sans fermeture, pour permettre l'accès à une chaise pour personne à mobilité réduite et pour faciliter le flux de personnes pouvant passer dans la cabine et pouvant être contrôlées.

Dans l'exemple illustré, la cabine présente en outre une profondeur totale, définie par la distance séparant l'ouverture 4 de la paroi latérale 2 principale opposée par rapport à l'espace intérieur 3, égale à 1,53 m et une largeur, définie par la distance séparant les deux autres parois latérales 2 principales en vis-à-vis de 1,29 m à l'intérieur, et de 1,53 m à l'extérieur. La cabine présente un poids de 220 kg ce qui rend son transport aisé une fois démontée.

Les parois latérales 2 sont ici en inox brossé et le toit 16 en polyméthacrylate de méthyle (PMMA). Ceci permet à la fois de conférer une résistance suffisante à la structure de la cabine 1 tout en allégeant son poids pour faciliter son transport une fois démontée.

Par ailleurs, la cabine 1 comporte, au niveau de la paroi latérale opposée à l'ouverture, une zone de détection 6 comprenant un orifice 8 unique. Cet orifice 8 est formé par un trou traversant la paroi latérale 2 sur toute son épaisseur de sorte qu'il permet une communication d'un flux d'air entre l'espace intérieur 3 et l'extérieur 7 de la cabine 1.

Pour favoriser la circulation de ce flux d'air, la cabine 1 comprend un dispositif de mise en circulation 5 d'air de sorte à diriger ledit flux d'air de l'espace intérieur 3 vers l'orifice 8.

Derrière la paroi latérale 2 portant l'orifice 8, à l'extérieur de la cabine 1, et au niveau dudit orifice 8 peut être placé : soit un chien pouvant sentir le flux d'air en provenance de l'espace intérieur de la cabine 1, soit un capteur d'un moyen de détection électronique.

De cette manière le dispositif de mise en circulation 5 d'air dirige le flux d'air de l'espace intérieur 3 où est placé la personne à contrôler vers la zone de détection 6, en particulier vers l'orifice 8 où ce flux d'air converge, canalisant ledit flux d'air provenant de l'espace intérieur 3 vers la truffe du chien ou le capteur électronique.

Cet orifice peut présenter une forme d'entonnoir (non représenté sur les figures), par exemple tronconique, dont une grande base est située du côté de l'espace intérieur 3 de la cabine 1 et une petite base débouche du côté extérieur 7. De cette manière la canalisation du flux d'air véhiculant les particules odorantes sera améliorée.

Dans la configuration telle qu'illustrée, l'orifice 8 est placé à une hauteur verticale par rapport au sol qui est suffisante pour permettre une détection avec un chien. En d'autre terme, la hauteur est choisie de sorte qu'un chien de taille moyenne puisse y placer facilement sa truffe. Cet orifice 8 est situé sur une moitié inférieure de la hauteur de la cabine, c'est-à-dire qu'il est placé à une hauteur comprise entre le sol et la moitié de la hauteur de la cabine, et de préférence, entre le sol et le tiers de la hauteur de la cabine.

Dans le mode de réalisation tel qu'illustré, le dispositif de mise en circulation 5 comprend :
- un dispositif d'aspiration 9 d'air ; et
- un dispositif de projection 11 orienté sensiblement vers l'espace intérieur 3 de la cabine 1, notamment vers l'orifice 8 de la zone de détection 6, pour projeter l'air aspiré par le dispositif d'aspiration 9 vers ledit orifice 8.

Le dispositif d'aspiration 9 est situé sur une tranche supérieure de l'embase supérieure 17 de la cabine 1. Il permet ici d'aspirer de l'air extérieur. Ce dispositif d'aspiration 9 est relié au dispositif de projection 11 de sorte que ce dernier est alimenté en air extérieur aspiré et le projette vers l'orifice 8.

De manière générale, le dispositif de projection 11 est placé sensiblement du côté opposé de la cabine où se situe la zone de détection 6. De cette manière l'espace intérieur 3 est traversé par le flux d'air généré et véhicule, durant son fonctionnement, les particules odorantes de la personne qui est contrôlée, laquelle est placée dans l'espace intérieur 3 de la cabine, soit entre le dispositif de projection 11 et la zone de détection 6.

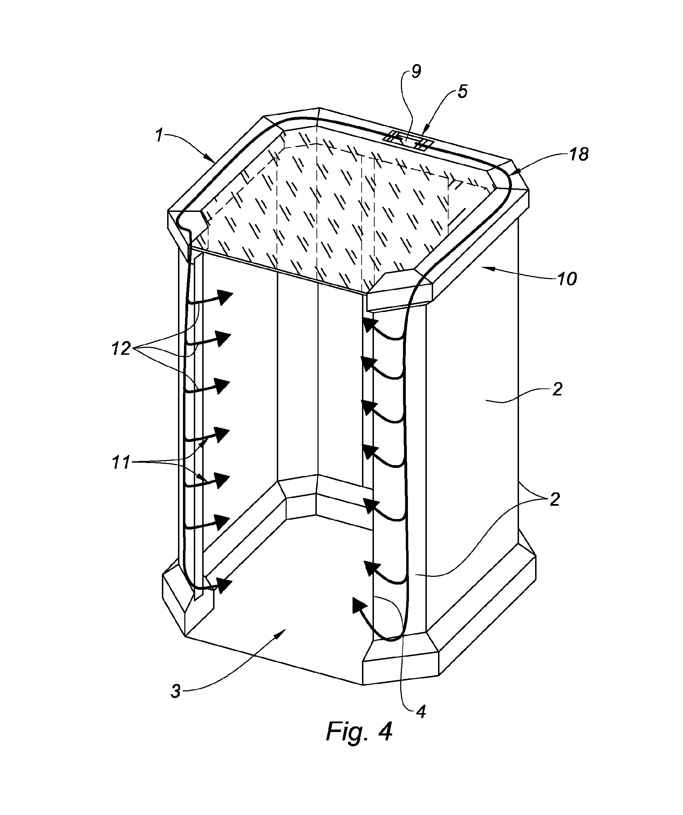

Dans le mode de réalisation illustré, notamment figure 4, les moyens de projections 11 comprennent quatorze buses 12 réparties équitablement de part et d'autre de l'ouverture 4. Ces buses sont ainsi portées par les deux parois latérales délimitant horizontalement l'ouverture 4.

Par ailleurs, ces buses sont réparties de façon homogène sur toute la hauteur de l'ouverture 4, à savoir du socle 14 jusque l'embase supérieure 17 portant le toit 16.

La paroi latérale 2 comprend une double-paroi, formée par une paroi intérieure et une paroi extérieure, entre lesquelles circule l'air aspiré vers le dispositif de projection 6. En particulier, l'air aspiré est véhiculé entre le dispositif d'aspiration 9 et le dispositif de projection 11 par un réseau 18 de conduites placé dans l'embase supérieure 17 et dans les parois latérales 2. Ce flux d'air, véhiculé du dispositif d'aspiration 9 vers les buses 12 du dispositif de projection 11 où il est éjecté, est schématisé par des flèches sur la figure 4. De préférence, comme cela est illustré sur la figure 4, seules les deux parois latérales 2 délimitant l'ouverture 4 sont traversées par le réseau 18 de conduites.

Le dispositif de mise en circulation d'air est alimenté en électricité et relié à un réseau électrique traditionnel.

Les parois latérales 2 sont ici opaques de sorte à éviter le contact visuel et physique entre l'animal et la personne contrôlée se trouvant dans la cabine 1.

Une telle cabine de recherche est particulièrement avantageuse. Lors de son utilisation, une personne à contrôler peut pénétrer facilement dans son espace intérieur 3 et un temps d'attente d'environ dix secondes suffit pour détecter ou non la présence de matières ou substances spécifiques, telles que des explosifs ou des drogues.

De façon générale, d'autres modes de réalisation peuvent être envisagés, notamment par leurs formes.

Par exemple, l'ouverture 3 peut être fermée par une première porte (non représentée sur les figures).

Il peut être également prévu, que la paroi latérale 2 principale située en regard de l'ouverture 3 sur laquelle est placé l'orifice 8 de la zone de détection 6 est montée articulée (non illustrée) par rapport aux autres parois latérales 2 de la cabine. En particulier, cette paroi latérale 2 articulée formant deuxième porte, ou porte de sortie, est fixée par des charnières à un bord du chanfrein périphérique formant paroi latérale 2 secondaire de la cabine 1. Dans ce cas, cette porte est de préférence une porte battante va-et-vient. Par ailleurs, dans le mode de réalisation illustré il est fait recours à l'utilisation d'un dispositif d'aspiration. Celui-ci peut être remplacé et/ou accompagné par au moins une source annexe de gaz qui serait stocké dans un réservoir adapté, pour alimenter le dispositif de projection en gaz, de préférence sous pression. Dans ce cas, le gaz est choisi de sorte être le moins odorant possible.

Le vocable « air » est ici interprété au sens large. En effet, lorsqu'un flux d'air est mis en circulation par l'utilisation d'un dispositif de projection d'un gaz différent, le flux ainsi généré et traversant l'orifice 8 comprend bien entendu en plus de l'air, ce gaz ainsi projeté.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Cabine (1) de recherche par détection olfactive, comprenant :
- au moins une paroi latérale (2) dressée sensiblement verticalement et délimitant un espace intérieur (3) agencé pour accueillir une personne à contrôler, et
- une ouverture (4) permettant l'accès de la personne à contrôler à cet espace intérieur (3),
la cabine (1) étant **caractérisée en ce qu'**elle comprend un dispositif de mise en circulation d'air (5) pour diriger un flux d'air contenu dans l'espace intérieur (3) vers une zone de détection (6) agencée pour canaliser le flux d'air de l'espace intérieur (3) vers l'extérieur (7).

2. Cabine (1) de recherche selon la revendication 1, **caractérisée en ce que** la zone de détection (6) comprend un orifice (8), de préférence unique, agencé pour canaliser le flux d'air provenant de l'espace intérieur (3) vers l'extérieur (7).

3. Cabine (1) de recherche selon la revendication 1 ou 2, **caractérisée en ce que** la zone de détection (6) est située au niveau de la paroi latérale (2) et opposée à l'ouverture(4).

4. Cabine (1) de recherche selon l'une quelconque des revendications précédentes, **caractérisée en ce que** le dispositif de mise en circulation (5) comprend au moins un dispositif d'aspiration (9) d'air situé de préférence au voisinage d'une extrémité supérieure (10) de la paroi latérale (2).

5. Cabine (1) de recherche selon l'une quelconque des revendications précédentes, **caractérisée en ce que** le dispositif de mise en circulation (5) comprend au moins un dispositif de projection (11) orienté sensiblement vers l'espace intérieur (3) de la cabine (1), de préférence vers la zone de détection (6).

6. Cabine (1) de recherche selon les revendications 4 et 5, **caractérisée en ce que** le dispositif de projection (11) projette l'air aspiré par le dispositif d'aspiration (9) vers la zone de détection (6).

7. Cabine (1) de recherche selon la revendication 5 ou 6, **caractérisée en ce que** le dispositif de projection (11) est situé au voisinage de l'ouverture (4), de préférence de part et d'autre de ladite ouverture (4).

8. Cabine (1) de recherche selon l'une quelconque des revendications 4 à 7, **caractérisée en ce que** le dispositif de projection (11) comprend une pluralité de buses (12) solidaires de la paroi latérale (2).

9. Cabine (1) de recherche selon l'une quelconque des revendications précédentes, **caractérisée en ce que** la paroi latérale (2) comprend une double-paroi, formée par une paroi intérieur et une paroi extérieure, entre lesquelles circule l'air aspiré vers le dispositif de projection (6).

10. Cabine (1) de recherche selon l'une quelconque des revendications précédentes, **caractérisée en ce qu'**une partie de la paroi latérale (2) est articulée par rapport à la cabine (1) pour former une porte communiquant entre l'espace intérieur (3) de ladite cabine (1) et l'extérieur (7) formant un sas de passage.
